Europäisches Patentamt

European Patent Office

Office européen des brevets

(19)

(11) Publication number: **0 136 157**
A2

## (12) EUROPEAN PATENT APPLICATION

(21) Application number: **84306424.7**

(22) Date of filing: **20.09.84**

(51) Int. Cl.⁴: **G 11 B 5/127**, G 11 B 5/187

(30) Priority: **21.09.83 JP 174702/83**

(43) Date of publication of application: **03.04.85**
**Bulletin 85/14**

(84) Designated Contracting States: **DE FR GB**

(71) Applicant: **HITACHI, LTD., 6, Kanda Surugadai 4-chome Chiyoda-ku, Tokyo 100 (JP)**

(72) Inventor: **Kumasaka, Noriyuki, 1-24, Suehirocho-1-chome, Ome-shi (JP)**
Inventor: **Shiiki, Kazuo, 2644-6, Kawajiri Shiroyamacho, Tsukui-gun Kanagawa-ken (JP)**
Inventor: **Shiroishi, Yoshihiro, A101, Hitachi-Koyasudai Apartment House, 32, Koyasumachi-2-chome Hachioji-shi (JP)**
Inventor: **Shinagawa, Kiminari, 1658-216, Nagasakucho, Chiba-shi (JP)**
Inventor: **Kudo, Mitsuhiro, 8-63, Sakaecho-1-chome Hamuramachi, Nishitama-gun Tokyo (JP)**

(74) Representative: **Williams, Trevor John et al, J.A. KEMP & CO. 14 South Square Gray's Inn, London WC1R 5EU (GB)**

(54) **Magnetic head for perpendicular magnetic recording.**

(57) There is provided a magnetic head for perpendicular magnetic recording which has a main pole core (15, 20, 20') and an auxiliary pole core (16, 23, 23') and is constituted such that the side surface of the auxiliary pole core opposite to the main pole core near the surface side which faces a magnetic recording medium (10) is formed like a concave or convex shape with respect to the main pole core. This magnetic head has excellent recording and reproducing characteristics which are not subjected to the interference actions on the recording and reproduction due to the edge portion of the auxiliary pole core.

ACTORUM AG

0136157

- 1 -

# MAGNETIC HEAD FOR PERPENDICULAR MAGNETIC RECORDING

The present invention relates to a practical magnetic head for recording and reproducing which is suitable for use in the perpendicular magnetic recording system.

Perpendicular magnetic recording systems for magnetizing a magnetic recording medium in the direction of a depth are getting most of the attention as a magnetic recording system having an excellent short wavelength chracteristic. To perform the good perpendicular magnetic recording, there are needed a magnetic recording medium having at its surface a magnetic film which has strong magnetic anisotropy in the direction perpendicular to the film surface and a magnetic recording head for generating the strong perpendicular component magnetic field to the recording medium.

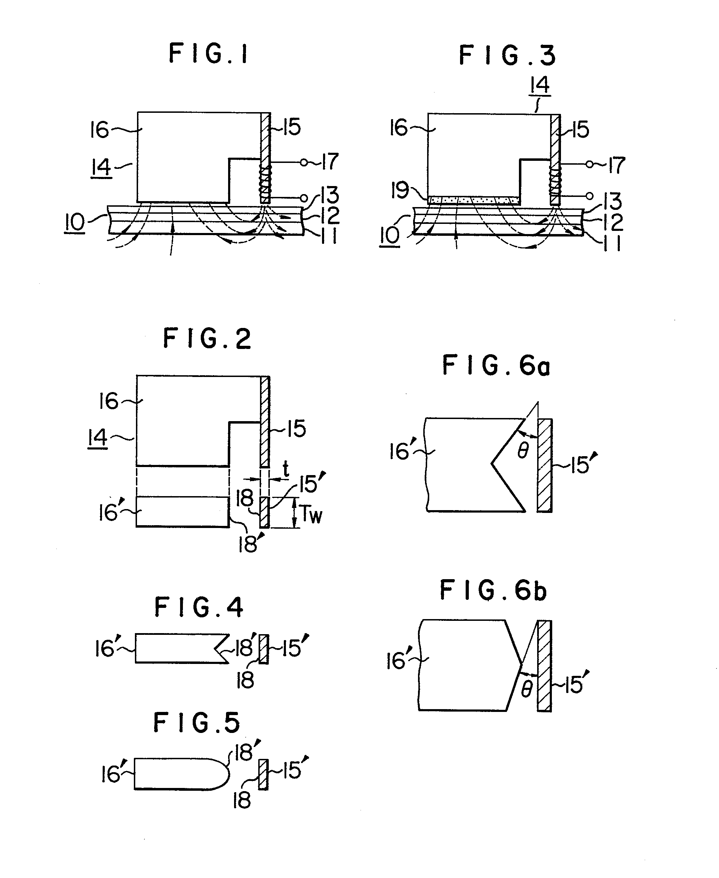

As a conventional perpendicular magnetic recording system, a constitution as shown in Fig. 1 has been proposed. A magnetic recording medium 10 comprises: a non-magnetic substrate 11; a magnetic film 12 such as permalloy or the like having an axis of easy magnetization in its film surface which is formed on the non-magnetic substrate 11; and a perpendicular magnetization film 13 consisting of Co-Cr or the like having an axis of easy magnetization in the direction perpendicular to the film surface, wherein the film 13 is formed on the film 12. A magnetic head 14 consists of a main pole core 15 having a square-like cross section and an auxiliary pole core 16. The main pole core 15 is magnetized by the signal current flowing through a conductor coil 17 wound around the main pole core 15. The recording to the perpendicular magnetization film 13 is performed due to the perpendicular magnetic field generated at the pointed edge portion of the main pole core 15. Therefore, a thickness of the pointed edge portion of the main pole core 15 is thinly formed in order to obtain the perpendicular component magnetic field having a steep distribution. Since the magnetic flux density at this portion becomes high, a thin magnetic plate or a thin film such as Sendust, permalloy or amorphous magnetic alloy having a high saturation flux density and high permeability is used. On the other hand, the magnetic fluxes (indicated by broken line arrows) are generated from the edge surface of the pointed edge portion of the main pole core 15 and pass through the perpendicular magnetization film 13 and are attenuated and diffused into the magnetic film 12 and into the air. The auxiliary pole core 16 serves as the magnetic flux collecting core for efficiently collecting the above-mentioned magnetic fluxes diffused and returning them to the main pole core 15. For this purpose, as shown in Fig. 2, it is necessary to constitute the magnetic head 14 in the manner such that an edge surface 16' of the auxiliary pole core 16 which faces the magnetic recording medium and the cross sectional area of each section are set to be sufficiently larger than an edge surface 15' of the main pole core 15. The above-mentioned structure of the magnetic head causes a problem such that, as shown in the drawing, in the cases where both of the main pole core 15 and the auxiliary pole core 16 have the square cross sections and where ridge portions 18 and 18', which face each other, of the edge surface 15' of the main pole core and of the edge surface 16' of the auxiliary pole core are parallel, the recording and reproducing actions at the hill portion 18' of the edge surface 16' of the auxiliary pole 16 other than the main pole 15 interfere the recording and reproducing actions of the main pole upon recording and reproducing, so that the unnecessary peculiar electro-magnetic converting characteristic is caused, resulting in remarkable deterioration of the characteristic as the magnetic head.

To avoid such a problem, a magnetic head having a structure as shown in Fig. 3 has been proposed. Namely, this method is such that a non-magnetic layer 19 is formed on the surface of the auxiliary pole core 16 opposite to the magnetic recording medium 10, and the layer 19 and the medium 10 are separated by a distance such that the recording and reproducing actions at the hill portions 18 and 18' of the pole edge surfaces do not interfere. Such a magnetic head is disclosed in, for example, Japanese Patent Application Laid-open No. 121608/78. The above-mentioned drawback can be solved by constituting the magnetic head in this way. However, the magnetic fluxes generated from the main pole core 15 cannot be efficiently collected, so that this causes the recording and reproducing efficiencies to be remarkably deteriorated. On the other hand, when the thickness of the non-magnetic layer 19 is set to be thin so as not to reduce the efficiencies, the interference will have appeared and the non-magnetic layer 19 will have been worn away as the result of the repeated running operations on the recording medium, so that this eliminates the effect of formation of the non-magnetic layer 19. Therefore, there is demanded a magnetic head structure whereby both of the main pole core 15 and the auxiliary pole core 16 are disposed close to the magnetic recording medium 10 and the unnecessary recording and reproducing actions are eliminated.

It is an object of the present invention to eliminate the drawbacks in the above-mentioned conventional technology and to provide a magnetic head for perpendicular magnetic recording having the structure whereby good recording and reproducing efficiencies are presented.

In order to accomplish the above object, a magnetic head for perpendicular magnetic recording of the present invention is constituted in the manner such that: a main pole core and an auxiliary pole core are integrally coupled at each one edge portion; the other edge portions of the main and auxiliary pole cores respectively have the edge surfaces which should closely face the recording surface of a magnetic recording medium; at least the cross sectional area near the above-mentioned edge surface of the main pole core is sufficiently smaller than the cross sectional area of the auxiliary pole core; the side surface opposite to the main pole core near the above edge portion of the auxiliary pole core is formed like a concave or convex shape with respect to the main pole core; and the side surface opposite to the main pole core near the edge portion of the auxiliary pole core does not form the parallel portion together with the surface in the direction of track width of the main pole core (namely, the surface perpendicular to the moving direction of the magnetic recording medium).

The cross section near the edge surface of the main pole core is ordinarily formed like a square shape having a side perpendicular to the direction of the line passing through the main and auxiliary pole cores.

It is desirable that the main pole core is made of magnetic material having a saturation flux density higher than that of the auxiliary pole core. In this case, a further desirable characteristic will be obtained if a magnetic core which has a thin non-magnetic layer on the edge surface side of the main pole core and consists of the same material as the auxiliary pole core is coupled to the surface of the main pole core opposite to the auxiliary pole core.

One or two auxiliary poles may be used. In case of using two auxiliary poles, the main pole is sandwiched by the two auxiliary poles. In this case, a further desirable characteristic will be derived if the main pole core and both auxiliary pole cores are coupled through magnetic cores which have thin non-magnetic layers on the sides of the edge surfaces of the main pole core and consist of the same material as the auxiliary pole cores.

With respect to the surface which has a concave or convex shape with regard to the main pole core and is formed on the side surface of the auxiliary pole core opposite to the main pole near the edge portion, it is preferable that two sides forming the concave or convex shape have the equal length at the cross section which is parallel to the edge surface of the auxiliary pole core (hereinafter, it is assumed that the cross section parallel to the edge surface is the isosceles triangle) and that the angles which are respectively formed by those equal two sides and the direction of track width (i.e., the direction perpendicular to the moving direction of the magnetic recording medium) are set to 5° to 45°, preferably, 10° to 30°. However, the above-mentioned two sides are not limited to the straight lines as mentioned above, but may be curved lines. In addition, when they have the convex shapes and are rectilinear, their pointed edge portions may be rounded.

The present invention will be apparent from the following detailed description taken in conjunction with the accompanying drawings, in which:

Fig. 1 is an explanatory diagram showing the relation between a conventional magnetic head for perpendicular magnetic recording and a magnetic recording medium;

Fig. 2 is an explanatory diagram of the conventional magnetic head for perpendicular recording;

Fig. 3 is an explanatory diagram showing the relation between another conventional magnetic head for perpendicular recording and the magnetic recording medium;

Figs. 4, 5, 6a, and 6b are plan views of the surfaces opposite to the magnetic recording medium of magnetic heads for perpendicular magnetic recording in embodiments according to the present invention;

Figs. 7, 8, 9, and 10 are perspective views of the magnetic heads for perpendicular recording in the embodiments according to the invention;

Figs. 11 and 12 are plan views of the surfaces opposite to the magnetic recording medium of magnetic heads for perpendicular recording in other embodiments of the invention; and

Figs. 13 and 14 are assembling perspective views showing the outlines of the methods of manufacturing the magnetic heads for perpendicular recording in the embodiments of the invention.

Embodiments of the present invention will now be described hereinbelow in comparison with the conventional magnetic head shown in Fig. 2. Figs. 4 and 5 are diagrams showing the fundamental structures when magnetic heads according to the invention are seen from the direction of the side of the surface opposite to the magnetic recording medium, namely, from the direction of the edge surface side, respectively.

As shown in Fig. 2, with respect to the main pole core 15 and the auxiliary pole core 16 of the conventional magnetic head 14, the edge surface of the main pole core 15 corresponds to 15' and the edge surface of the auxiliary pole core 16 corresponds to 16' when they are seen from the side of the magnetic recording medium surface.  In Fig. 2, $\underline{t}$ denotes a thickness of the main pole core 15 and $T_w$ indicates a track width.  In such a conventional magnetic head, since the hill portion 18' of the edge surface 16' of the auxiliary pole core 16 on the side of the main pole core 15 is formed in parallel to the hill portion 18 having the direction of track width of the edge surface 15' of the main pole core 15, the recording and reproducing actions at the hill portion 18' of the edge surface of the auxiliary pole core 16 interfere, so that the unnecessary peculiar electro-magnetic converting characteristic is caused.

Mangetic heads of the present invention which solved such a drawback will now be explained hereinbelow. In Fig. 4, for the edge surface hill portion 18 of the main pole core 15, the hill portion 18' of the edge surface 16' of the auxiliary pole core 16 opposite thereto is formed like a concave shape, thereby constituting the magnetic head such that the hill portion 18' does not have the portion parallel to the edge surface hill portion 18 of the main pole core 15.  On the other hand, in Fig. 5, for the edge surface hill portion 18 of the main pole core 15, the edge surface hill portion 18' of the auxiliary pole core 16 which faces the hill portion 18 is formed like a convex shape, thereby constituting the magnetic head such that the hill portion 18' does not have the portion parallel to the edge surface hill portion 18 of the main pole core 15.  Namely, the side surface opposite to the main pole 15 near the edge surface hill portion 18' of the auxiliary pole core 16 which faces the main pole core 15 may be formed like a concave or convex shape. As already described above, as shown in Figs. 6a and 6b, it is preferable that the concave or convex shape which is formed at the edge surface hill portion 18' of the auxiliary pole core 16 is constituted in the manner such that its cross section is an isosceles triangle and the angles θ formed by two equal sides of the isosceles triangle and the direction of track width of the main pole core 15 are set to 5° to 45°, preferably, 10° to 30°. When the value of θ is less than 5°, the recording and reproducing actions at the edge surface hill portions of the main and both auxiliary pole cores begin to interfere. On the other hand, when the value of θ is over 45°, the central portion of the concave portion of the auxiliary pole core 16 and both edge portions of the convex portion thereof are located too far away from the main pole core 15, so that the efficiency deteriorates. In addition, in the case where the edge portion of the auxiliary pole core 16 is formed like a convex shape, it is preferable to round the projected pointed edge portion at the center. This is because the concentration of magnetic fluxes is lightened.

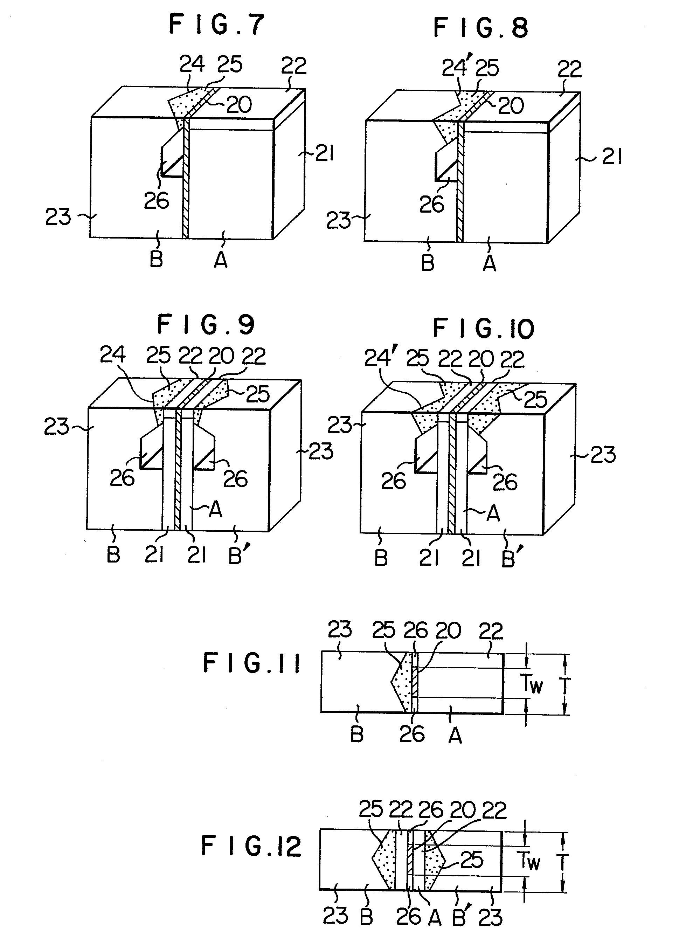

Next, typical examples of practical magnetic heads for perpendicular magnetic recording according to the present invention are illustrated in Figs. 7 to 12.

Figs. 7 and 8 are perspective views of magnetic head cores for perpendicular recording of the present invention, each of which consists of a main pole core A and an auxiliary pole core B.

Figs. 9 and 10 are perspective views of magnetic head cores for perpendicular recording showing other embodiments of the invention, each of which has a main pole core block A and auxiliary pole core blocks B and B' on both sides thereof.

Figs. 11 and 12 are plan views of magnetic head core blocks for perpendicular recording showing further other embodiments of the invention when they are seen from the side opposite to the magnetic recording medium. In each diagram, the similar parts and components are designated by the same reference numerals.

The main pole core block A comprises: a main pole core 20 consisting of material having a high saturation flux density and high permeability such as Fe-Si alloy, Fe-Ni alloy, Fe-Aℓ-Si alloy, amorphous magnetic alloy, or the like; and auxiliary members 21 and 22 of the main pole core 20. The auxiliary member 21 is made of bulk material 23 having high permeability such as Mn-Zn ferrite, or Ni-Zn ferrite or the like. The auxiliary member 22 is made of non-magnetic material such as glass, ceramics or the like.

Since the thickness of main pole core 20 is needed to be set to 1 μm or less for attainment of the high-density recording, the use of the main pole solely is not fitted for practical use because the magnetic resistance becomes high and the efficiency remarkably deteriorates and the mechanical strength lacks. Therefore, the main pole core 20 is formed on the side surfaces of the auxiliary members 21 and 22. In order to lighten the magnetic resistance of the main pole core 20 as well as to assure the mechanical strength, the magnetic material of high permeability is used as the auxiliary member 21. On the other hand, the auxiliary member 22 is made of non-magnetic material and is arranged on the surface side opposite to the magnetic recording medium of the main pole core A, while its thickness is set to 5 to 50 microns. Next, the auxiliary pole core block B is made of the bulk material 23 of high permeability such as Mn-Zn ferrite, Ni-Zn ferrite or the like. A structure portion 24 or 24' having the concave or convex shape is disposed in the hill portion which faces the main pole on the surface side opposite to the magnetic recording medium. Further, a window 26 for winding coils is provided below the structure portions 24 and 24' having the concave or convex shape, respectively. In Fig. 7, the structure portion 24 of the concave shape is provided, while the structure portion 24' of the convex shape is provided in Fig. 8. Also, non-magnetic material 25 such as glass or the like is filled in the respective structure portions 24 and 24'.

Figs. 9 and 10 show magnetic head cores for perpendicular recording, each of which comprises: the main pole core block A which is constituted by the main pole core 20 sandwiched by the auxiliary members 21 and 22; and the auxiliary pole core blocks B and B' on both sides thereof. In Fig. 9, the auxiliary pole core blocks B and B' have the structure portions 24 of the concave shapes, while the auxiliary pole core blocks B and B' have the structure portions 24' of the convex shapes in Fig. 10. In these cases, it is preferable to set the thicknesses of auxiliary members 21 and 22 of the main pole core block A to be ten or more times the thickness of the main pole core 20.

Figs. 11 and 12 show structures of magnetic heads for a narrow track. Fig. 11 shows an example of the core block shape corresponding to that of Fig. 7, while Fig. 12 shows an example of the core block shape corresponding to that of Fig. 9, respectively. The width $T_w$ of main pole core 20 corresponds to the track width and is set to be narrower than the core width T. The windows 26 are filled with non-magnetic material.

Next, the material and shape of each portion of the magnetic heads for perpendicular recording to the invention will be explained further in detail.

In the main pole core block A, with respect to the magnetic heads using permalloy (saturation flux density $B_s$ = 9000 gauss), Sendust ($B_s$ = 9500 gauss), Co-Zr-W amorphous alloy ($B_s$ = 12000 gauss), and Fe-Si-Ru alloy ($B_s$ = 18500 gauss) each having the thickness of 0.5 μm as the main pole core 20, the recording on and reproduction from the Co-Cr double layer medium for perpendicular magnetic recording (coercive force $H_c$ = 1000 oersteds) using the permalloy film as the base film were performed. As the result of the experiments, it has been found that the excellent characteristics were presented when the Co-Zr-W amorphous magnetic alloy and Fe-Si-Ru magnetic alloy each having the saturation flux density $B_s$ = 12000 gauss or more were used. In addition, with respect to the auxiliary member 21 of high permeability and the non-magnetic auxiliary member 22 which constitute the main pole core block A, it was more preferable to use Mn-Zn ferrite rather than Ni-Zn ferrite as the high permeability auxiliary member 21. Further, it has been confirmed that monocrystalline substance is better than sintered substance regarding Mn-Zn ferrite. It is considered that this is because the permeability of Mn-Zn ferrite is higher than that of Ni-Zn ferrite and the former is more dense as the sintered substance. Namely, material having few holes is needed as the auxiliary member in order to accurately form the pole having the thickness of about 0.5 μm or less. Therefore, an attention should be further paid to the non-magnetic auxiliary member 22. In this embodiment, examination was made regarding $BaTiO_3$, non-magnetic ferrite ($Fe_2O_3 \cdot ZnO$), and ceramics of $Al_2O_3$-TiC or like. Thus, it has been found that all of them were unsatisfactory to accurately form the main pole having the thickness of 0.5 μm or less. As the result of examination, preferable material was glass, sapphire and fused $Al_2O_3$ material, each of which has the dense surface grounded and finished.

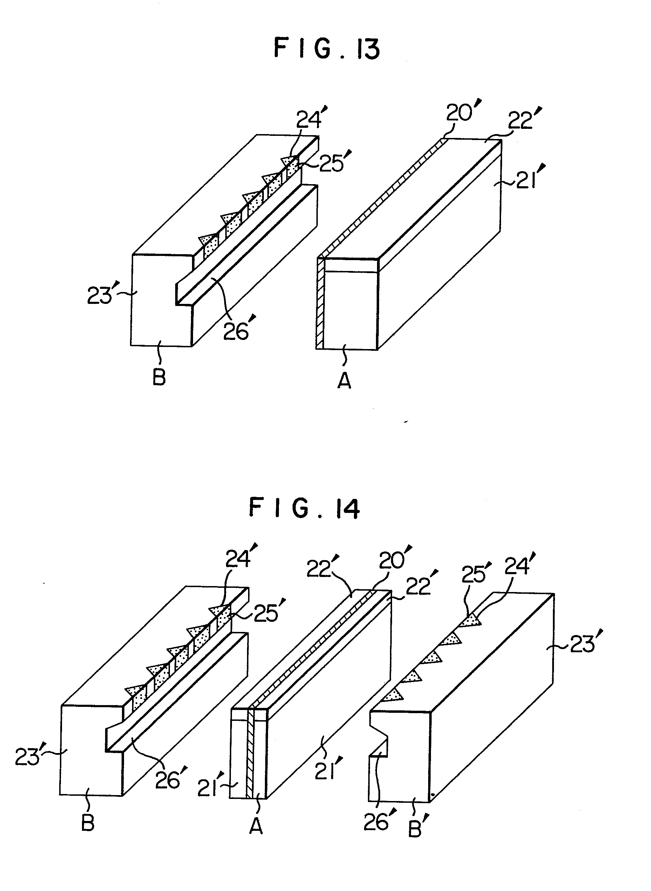

Next, an example of the methods of manufacturing the magnetic heads for perpendicular recording of the invention will be explained hereinbelow. Fig. 13 is a block perspective view showing the outline of the method of manufacturing the magnetic head for perpendicular recording of the invention shown in Fig. 7, whereby a number of such magnetic heads are obtained. The main pole core block A is produced in the manner such that: a borosilicated glass auxiliary member 22' having the thickness of 20 μm is coupled on the upper surface of an Mn-Zn ferrite auxiliary member 21' having the saturation flux density $B_s$ of 5000 gauss; the side surface of this junction block is mirror ground; and thereafter, a $Co_{89}-So_8-W_3$ (numeric values show at.%) amorphous magnetic film 20' having the $B_s$ of 12000 gauss and the thickness of 0.3 μm is formed on that surface by way of sputtering method. On the other hand, the auxiliary pole core block B is constituted in the manner such that: concave portions (V-character shaped grooves) 24' each having a predetermined size are formed at regular intervals in the hill portion on the surface side opposite to the magnetic recording medium of the surface of the Mn-Zn ferrite block 23' having the $B_s$ of 5000 gauss which faces the main pole core block A; non-magnetic material (lead glass) 25' is filled in these grooves; the above-mentioned confronting surface is mirror ground; and thereafter, a long groove 26' serving as a window for winding the coils is formed. The main pole core block A and the auxiliary pole core block B produced in this way are confronted with each other and are joined through glass or resin, thereafter by cutting at predetermined locations, the magnetic head core for perpendicular recording shown in Fig. 7 is obtained.

Fig. 14 is a perspective view showing the outline of method of manufacturing the magnetic head for

- 15 -

0136157

perpendicular recording of the invention shown in Fig. 9. In this case, the main pole core block A has a structure such that the same amorphous magnetic film 20' as in the case of Fig. 13 is sandwiched from both sides thereof by the magnetic ferrite auxiliary member 21' and the non-magnetic member 22' laid thereon.  The auxiliary pole core blocks B and B' have the V-character shaped grooves 25' formed by the manufacturing method similar to that explained in conjunction with Fig. 13.  The main pole core block A is sandwiched by the auxiliary pole core blocks B and B' and integrally joined, and thereafter by cutting at predetermined locations, the magnetic head for perpendicular recording shown in Fig. 9 is obtained.

As described above, according to the present invention, in the magnetic head for perpendicular magnetic recording in which the main pole core and the auxiliary pole core are joined, it is possible to obtain the magnetic head for perpendicular magnetic recording having excellent recording and reproducing characteristics since the interfering actions on the recording and reproduction due to the auxiliary pole edge portion are elimiated.  In addition, the present invention provides the magnetic head having the structure suitable for high mass-productivity when it is put to practical use.

On the other hand, with regard to the matters which are not set forth in this specification, the well-known knowledge in this technical field may be used.

Although the invention has been described in its

0136157

preferred form with a certain degree of particularity, it is understood that the present disclosure of the preferred form has been changed in the details of construction, and the combination and arrangement of parts may be modified without departing from the spirit and the scope of the invention as hereinafter claimed.

CLAIMS:

1.      A magnetic head for perpendicular magnetic recording comprising a main pole core (15, 20, 20') and an auxiliary pole core (16, 23, 23') which are integrally joined at each one edge portion, wherein

each of said main and auxiliary pole cores having, at the other edge portion, an edge surface (15', 18; 16', 18') which should closely face the recording surface of a magnetic recording medium (10), respectively,

the cross sectional area near said edge surface (15', 18) of at least said main pole core (15, 20, 20') being sufficiently smaller than the cross sectional area of said auxiliary pole core (16, 23, 23'),

the cross section near said edge surface (15', 18) of said main pole core being constituted like a square shape having a side perpendicular to the direction of the line passing through said main and auxiliary pole cores,

said main pole core being made of magnetic material of a saturation flux density ($B_s$) higher than that of said auxiliary pole core, and

the side surface opposite to said main pole core (15, 20, 20') near said edge portion (16', 18') of said auxiliary pole core (16, 23, 23') having the surface of a concave or convex shape with respect to said main pole core.

2.      A magnetic head for perpendicular magnetic recording comprising a main pole core (15, 20, 20') and an auxiliary pole core (16, 23, 23') which are integrally joined at each one edge portion, wherein

each of said main and auxiliary pole cores having, at the other edge portion, an edge surface (15', 18; 16', 18') which should closely face the recording surface of a magnetic recording medium (10), respectively,

the cross sectional area near said edge surface (15', 18) of at least said main pole core (15, 20, 20') being sufficiently smaller than the cross sectional area of said auxiliary pole core (16, 23, 23'),

the cross section near said edge surface (15', 18) of said main pole core being constituted like a square shape having a side perpendicular to the direction of the line passing through said main and auxiliary pole cores,

said main pole core being made of magnetic material of a saturation flux density ($B_s$) higher than that of said auxiliary pole core,

the side surface opposite to said main pole core (15, 20, 20') near said edge portion (16', 18') of said auxiliary pole core (16, 23, 23') having the surface of a concave or convex shape with respect to said main pole core, and

a magnetic core (A) which consists of the same material as said auxiliary pole core and has a thin non-magnetic layer (22, 22') on the side of said edge surface of the main pole core being joined onto the surface on the side opposite to the auxiliary pole core of the main pole core.

3.    A magnetic head for perpendicular magnetic recording comprising a main pole core (20, 20') and two auxiliary pole cores (23, 23') which sandwich said main pole core (20, 20') which are integrally joined at each one edge portion, wherein

each of said main and both auxiliary pole cores having, at the other edge portion, an edge surface which should closely face the recording surface of a magnetic recording medium (10), respectively,

the cross sectional area near said edge surface of at least said main pole core (20, 20') being sufficiently smaller than the cross sectional area of each of said auxiliary pole core (23, 23'),

the cross section near said edge surface of said main pole core (20, 20') being constituted like a square shape having a side perpendicular to the direction of the line passing through said main and both auxiliary pole cores,

said main pole core being made of magnetic material of a saturation flux density $(B_s)$ higher than that of each of said auxiliary pole cores,

the side surface opposite to said main pole core (20, 20') near said edge portion of each of said auxiliary pole cores (23, 23') having the surface of a concave or convex shape with respect to the main pole core (20, 20'), and

said main pole core (20, 20') and said both auxiliary pole cores (23, 23') being coupled through magnetic cores (A) which consist of the same material as the auxiliary pole cores (23, 23') and have thin non-magnetic layers (22, 22') on both sides of said edge surface of the main pole core (20, 20').

4.      A magnetic head according to claim 1, 2 or 3, wherein the surface of the concave or convex shape with respect to said main pole core which is formed in the side surface opposite to said main pole core (15, 20, 20') near said edge portion of said auxiliary pole core (16, 23, 23') is constituted in the manner such that: the cross section parallel to said edge surface of the auxiliary pole core is a isosceles triangle and the angle θ formed by the two equal sides of said isosceles triangle and the direction perpendicular to the direction of the line passing through said main and auxiliary pole cores lies within a range of 5° to 45°.

5.      A magnetic head according to claim 4, wherein said angle θ lies within a range of 10° to 30°.

FIG.1

FIG.3

FIG.2

FIG.6a

FIG.4

FIG.6b

FIG.5

FIG.7

24 25 22
20
21
23
26
B A

FIG.8

24′ 25 22
20
21
23
26
B A

FIG.9

24 25 22 20 22
25
23
23
26 26
A
B 21 21 B′

FIG.10

24′ 25 22 20 22
25
23
23
26 26
A
B 21 21 B′

FIG.11

23 25 26 20 22
$T_w$ T
B 26 A

FIG.12

25 22 26 20 22
25
$T_w$ T
23 B 26 A B′ 23

F I G . 13

F I G . 14